# FASCICULE DE BREVET EUROPEEN

(11) **EP 0 456 798 B1**
(45) Date de publication et mention de la délivrance du brevet: **27.07.1994**
(21) Numéro de dépôt: 91900274.1
(22) Date de dépôt: 04.12.1990
(51) Int. Cl.: B01J 3/00, A23P 1/00, B67C 3/16

(54) **DISPOSITIF DE MISE SOUS VIDE D'UN RECIPIENT**
VORRICHTUNG ZUR EVAKUIERUNG EINES REZIPIENTEN
DEVICE FOR PRODUCING A VACCUUM IN A CONTAINER

(30) Priorité: 04.12.1989 FR 8915954
(43) Date de publication de la demande: 21.11.1991
(73) Titulaire: ROBOT-COUPE S.A., F-71303 Montceau-les-Mines (FR)
(72) Inventeur: GATEAUD, André, F-71420 Perrecy-les-Forges (FR); FLECHE, Michel, F-71450 Blanzy (FR); GONNEAUD, Patrick, F-71230 S.-Vallier (FR)
(74) Mandataire: Viard, Jean
(86) Numéro de dépôt international: FR9000875
(87) Numéro de publication internationale: WO9108046

(56) Documents cités:
- CH-A- 202 512
- FR-A- 712 781
- FR-A- 2 493 291
- GB-A- 680 768

## Description

La présente invention a pour objet un dispositif amovible de mise sous vide d'un récipient ou d'une cuve de travail, destiné en particulier, mais non exclusivement, à être monté sur un appareil de traitement des aliments.

Des appareils de traitement des aliments permettant de couper, de battre ou de mélanger des matières alimentaires diverses contenues dans une cuve sont bien connus. Différents outils peuvent être montés sur un arbre passant à travers le fond de la cuve, ledit arbre étant entraîné par un moteur se trouvant dans un carter disposé généralement au dessous de la cuve.

Toutefois certains aliments tel que, par exemple, le foie gras doivent être travaillés à l'abri de l'air pour éviter toute oxydation.

Pour traiter de tels aliments, il est déjà connu de réaliser des cuves étanches à l'intérieur desquel pénètrent des canalisations reliées à une pompe à vide. Mais un tel appareil est habituellement lourd, encombrant et coûteux.

Des appareils faisant appel au vide pour remplir des bouteilles sont décrits dans FR-A-2 493 291 et GB-A-680 768 mais dans ces appareils, le vide est utilisé comme élément moteur et non comme un moyen pour obtenir une atmosphère contrôlée.

CH-A-202 512 décrit une cuve permettant de gazéifier un liquide dans lequel l'air est chassé par le liquide lors du remplissage, la vanne de remplissage étant ensuite fermée.

La présente invention a pour objet un dispositif amovible permettant la mise sous vide d'un récipient étanche à sa partie inférieure. L'étanchéité à la partie inférieure est réalisée par des moyens connus qui ne seront pas décrits.

Selon la présente invention, le dispositif amovible de mise sous vide d'un récipient par action d'une pompe à vide est caractérisé en ce qu'il comprend un couvercle destiné à être adapté sur le haut du récipient comportant une trémie centrale en forme d'entonnoir, à l'intérieur de laquelle vient se reposer la partie inférieure d'un corps creux en relation avec l'intérieur de la cuve, un joint d'étanchéité disposé entre la trémie et le corps, le corps étant relié à une pompe à vide par l'intermédiaire d'une vanne.

Selon une autre caractéristique de l'invention, un conduit central traverse de haut en bas le corps creux, un déflecteur étant vissé à la partie inférieure de la tige.

Grâce au tube intérieur, il est possible d'introduire en cours de préparation des ingrédients fluides tels que des poudres ou du liquide, sans détruire le vide régnant à l'intérieur de la cuve.

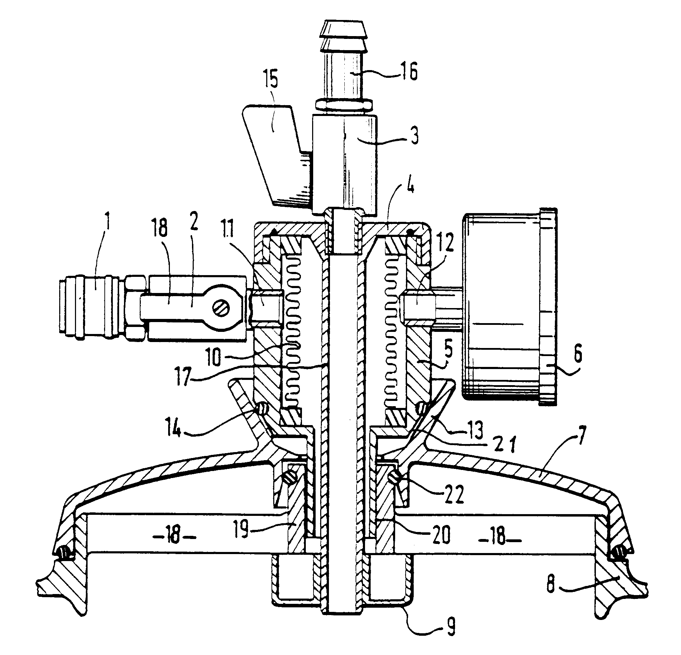

D'autres caractéristiques avantages de l'invention apparaîtront au cours de la description qui va suivre d'un mode particulier de réalisation donné uniquement à titre d'exemple non limitatif en regard de la figure unique qui représente un dispositif selon l'invention en coupe verticale.

Sur la figure unique on voit que le dispositif comprend une canalisation 1 qui est reliée à une source de vide (non représentée) telle qu'une pompe à palette ou analogue. Le dispositif peut être isolé de la source de vide par une vanne 2. La vanne 2 correspond avec l'intérieur du dispositif par un orifice radial 11. Le dispositif proprement dit comprend un corps creux 5 fermé par un couvercle 4. A l'oppose du conduit d'aspiration 1 est disposé un manomètre 6 de contrôle de la pression à l'intérieur de la cuve (non représentée). Le manomètre est branché sur le corps 5 par un piquage 12. Le corps 5 prend appui sur le couvercle 8 de la cuve, par l'intermédiaire d'un élément ou couvercle auxiliaire 7 destiné à être adapté sur le haut du récipient. Le couvercle 8 présente une couronne munie de moyens (non représentés) de fixation sur la cuve et des nervures 18 supportant un manchon central 19.

A l'intérieur du manchon central 19 est insérée une jupe 20 solidaire du corps creux 5. Le couvercle auxiliaire 7 présente une trémie centrale en entonnoir 13 dans laquelle vient reposer la partie inférieure 21 du corps 5 conformée en tronc de cône. L'isolation vis à vis de l'extérieur est assurée par un joint 14 et par une joint 22.

A la partie supérieure du corps 5 se trouve une vanne 3 pouvant être fermée à l'aide d'une manette 15. Au dessus de la vanne 3 est prévu un embout 16 permettant le raccordement à un réservoir d'eau ou de liquide et, par exemple, à un réservoir d'huile. A l'intérieur du corps 5 est prévu un filtre 10 laissant passer l'air, mais retenant les particules liquides ou solides afin que celles-ci ne puissent pénétrer dans la pompe à vide. La vanne 3 s'encastre à son extrémité inférieure dans un tube 17 qui traverse le couvercle auxiliaire 7 et le couvercle 8 et est maintenu par une pièce 9 de manière à ce qu'il y ait un contact direct entre la canalisation 16 et l'intérieur de la cuve. Bien entendu, le couvercle auxiliaire 7 est monté sur le haut de la cuve de travail par l'intermédiaire du couvercle 8 et d'un joint (non référencé) et de façon générale des joints d'étanchéité sont prévus, avec emplacements désirés notamment entre le couvercle 4 et le corps 5. La pièce 9 est vissée à la partie inférieure de la tige 17 et prend appui sur la surface inférieure des nervures 18. Outre son action de fixation mécanique, la pièce en cloche 9 assure un rôle de déflecteur pour éviter que les produits se trouvent dans la cuve ne montent dans le corps 5. En effet, dans un appareil de ce type, la matière est violemment agitée et des projections se produisent sur toutes les parois de la cuve. C'est pour cette raison que le diamètre de la cloche 9 est supérieur aux dimensions d'un écrou servant à assurer la fixation.

Le fonctionnement du dispositif est le suivant. La cuve étant une cuve de travail ordinaire, lorsque l'on souhaite opérer sous vide, on monte le corps 5 sur le couvercle auxiliaire 7 ce qui le maintient en position et la pièce 9 est vissée sur le couvercle 8. Après mise en marche de la pompe, la vanne 3 étant maintenue fermée la vanne 2 est ouverte par la manette 18 et le vide s'instaure progressivement à l'intérieur de la cuve.

La pression atmosphérique n'étant plus équilibrée, le corps 5 est aspiré vers le bas ce qui écrase le joint 14 et assure une bonne étanchéité. En fonction des besoins de la préparation, le vide peut être maintenu ou, par action sur la manette 18 de la vanne 2, la liaison avec la pompe peut être interrompue. Si, au cours de la préparation il est nécessaire d'introduire par exemple un liquide tel que de l'huile à l'intérieur de la cuve, on ouvre alors la vanne 3 par action sur la manette 15. La vanne 3 est reliée par l'embout 16 à un réservoir ( non représenté) et le liquide s'écoule par la vanne 3 et le tube 17 pour tomber directement dans la cuve dans l'axe de celle- ci où elle est reprise par le couteau tournant à la partie inférieure de la cuve. La vanne 3 est alors refermée et la préparation est poursuivie. L'introduction d'une quantité déterminée de liquide ne modifie pas sensiblement, la pression à l'intérieur de la cuve qui reste sous un vide primaire.

Après réalisation de la préparation, la cuve peut être ouverte après remise sous pression atmosphérique grâce à l'une des vannes 2 ou 3 et le couvercle 8 est retiré de la cuve.

Ainsi la présente invention permet grâce à un montage très simple, d'utiliser une cuve normale en cuve travaillant sous vide. De plus, elle permet d'introduire, en cours d'opération des ingrédients divers, sans "casser" le vide.

## Revendications

1. Dispositif amovible de mise sous vide d'un récipient par action d'une pompe à vide, caractérisé en ce qu'il comprend un couvercle (7) destiné à être adapté sur le haut du récipient, ledit couvercle comportant une trémie centrale (13) en forme d'entonnoir, à l'intérieur de laquelle vient reposer la partie inférieure d'un corps creux (5) en relation avec l'intérieur de la cuve, un joint d'étanchéité (14) étant disposé entre la trémie (13) et le corps (5), le corps (5) étant relié à une pompe à vide (1) par l'intermédiaire d'une vanne (2).

2. Dispositif selon la revendication 1, caractérisé en ce que un conduit central (17) traverse de haut en bas le corps creux (5), un déflecteur (9) étant vissé à la partie inférieure de la tige (17).

3. Dispositif selon la revendication 2, caractérisé en ce que une vanne (3) et un ajutage (16) sont montés à la partie supérieure de la tige (17).

4. Dispositif selon l'une quelconque des revendications précédentes, caractérisé en ce que un manomètre (6) correspondant avec l'intérieur du corps creux (5) par l'intermédiaire d'un piquage (12) est monté sur celui-ci.

5. Dispositif selon l'une quelconque des revendications précédentes, caractérisé en ce que une jupe (20) prévue à la partie inférieure du corps (5) pénètre dans un manchon (19) du couvercle (8) de la cuve.

6. Dispositif selon l'une quelconque des revendications précédentes, caractérisé en ce que un filtre (10) est monté à l'intérieur du corps creux (5), parallèlement à la tige (17).

## Claims

1. A removable device for evacuating a receptacle by means of a vacuum pump, the device being characterized in that it comprises a lid (7) designed to be fitted to the top of the receptacle, said lid including a funnel-shaped central hopper (13), inside which there rests the bottom portion of a hollow body (5) in communication with the inside of the bowl, a sealing ring (14) being disposed between the hopper (13) and the body (5), the body (5) being connected to a vacuum pump (1) via a valve (2).

2. A device according to claim 1, characterized in that a central duct (17) passes down through the hollow body (5), with a deflector (9) being screwed to the bottom portion of the rod (17).

3. A device according to claim 2, characterized in that a valve (3) and an endpiece (16) are mounted at the top of the rod (17).

4. A device according to any preceding claim, characterized in that a pressure gauge (6) is mounted on the hollow body (5) to communicate with the inside thereof via a tapping point (12).

5. A device according to any preceding claim, characterized in that a skirt (20) provided at the bottom of the body (5) penetrates into a sleeve (19) in the lid (8) of the bowl.

6. A device according to any preceding claim, characterized in that a filter (10) is mounted inside the hollow body (5) parallel to the rod (17).

## Patentansprüche

1. Abnehmbare Vorrichtung zur Evakuierung eines Rezipienten durch Einwirkung einer Vakuumpumpe, dadurch gekennzeichnet, daß sie eine Abdeckung (7) beinhaltet, die zur Anbringung an der Oberseite des Rezipienten vorgesehen ist, wobei die Abdeckung eine mittige Aufnahme (13) in Form eines Trichters umfaßt, an dessen Innerem die Unterseite eines Hohlkörpers (5) bezogen auf das Innere des Behälters zur Auflage kommt, wobei zwischen der Aufnahme (13) und dem Körper (5) eine Dichtung (14) angeordnet ist und der Körper (5) über ein Ventil (2) mit einer Vakuumpumpe (1) verbunden ist.

2. Vorrichtung nach Anspruch 1, dadurch gekennzeichnet, daß eine zentrale Leitung (17) den Hohlkörper (5) von oben nach unten durchquert, wobei ein Abweiser (9) an der Unterseite der Rohrleitung (17) angeschraubt ist.

3. Vorrichtung nach Anspruch 2, dadurch gekennzeichnet, daß an der Oberseite der Rohrleitung (17) ein Ventil (3) und ein Anschlußstutzen (16) angebracht sind.

4. Vorrichtung nach einem der vorhergehenden Ansprüche, dadurch gekennzeichnet, daß ein Manometer (6), das mit dem Inneren des Hohlkörpers (5) über eine Rohrabzweigung (12) in Verbindung steht, auf dieser angebracht ist.

5. Vorrichtung nach einem der vorhergehenden Ansprüche, dadurch gekennzeichnet, daß eine am unteren Teil des Körpers (5) vorgesehene Schürze (20) in eine Muffe (19) der Abdeckung (8) des Behälters eingreift.

6. Vorrichtung nach einem der vorhergehenden Ansprüche, dadurch gekennzeichnet, daß im Inneren des Hohlkörpers (5) ein Filter (10) parallel zu der Rohrleitung (17) angebracht ist.
